Europäisches Patentamt

European Patent Office

Office européen des brevets

(11) Veröffentlichungsnummer: **0 015 494**
**B1**

(12) # EUROPÄISCHE PATENTSCHRIFT

(45) Veröffentlichungstag der Patentschrift:
23.06.82

(21) Anmeldenummer: 80100968.9

(22) Anmeldetag: 27.02.80

(51) Int. Cl.³: **C 08 G 63/06**, C 08 G 63/08,
C 10 M 1/26, C 10 M 3/20,
C 07 C 69/66

(54) Kondensationsprodukte und darauf basierende Metallbearbeitungs-Schmieröle.

(30) Priorität: 10.03.79 DE 2909517

(43) Veröffentlichungstag der Anmeldung:
17.09.80 Patentblatt 80/19

(45) Bekanntmachung des Hinweises auf die Patenterteilung:
23.06.82 Patentblatt 82/25

(84) Benannte Vertragsstaaten:
BE DE FR GB IT NL

(56) Entgegenhaltungen:
DE B 1 794 240
GB A 635 708
US A 2 480 332
US A 2 785 978
US A 3 383 313

(73) Patentinhaber: BAYER AG, Zentralbereich Patente,
Marken und Lizenzen, D-5090 Leverkusen 1, Bayerwerk
(DE)

(72) Erfinder: Hentschel, Karl-Heinz, Dr.,
Heckschenstrasse 89, D-4150 Krefeld 10 (DE)
Erfinder: Dhein, Rolf, Dr., Deswatinesstrasse 30,
D-4150 Krefeld (DE)
Erfinder: Schüle, Wolfgang, Egerlandweg 5,
D-6834 Ketsch (DE)

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Kondensationsprodukte und darauf basierende Metallbearbeitungs-Schmieröle

Die vorliegende Erfindung betrifft neue, als Basis-Schmiermittel zur Bearbeitung und Verformung von Metallen, bevorzugt zur spanlosen Verformung, wie z. B. zum Kalt- oder Warmwalzen von Stahl- oder Aluminiumprodukten geeignete Kondensationsprodukte aus Polyolen, aliphatischen Hydroxicarbonsäuren und Fettsäuren.

Die Anforderungen an Schmiermittel für die Metallverarbeitung wurden in letzter Zeit beträchtlich erhöht, so z. B. beim Kalt- oder Warmverformen von Stahl, wo größere Stahlplatten, die Einführung von Hochgeschwindigkeits-Bandwalzwerken und kontinuierlichen Verguß-Arbeitsweisen die Gefahr eines gehäuften Auftretens von Oberflächenschäden in den Fertigprodukten, sowie einer Verminderung der Lebensdauer der zum Walzen des Stahls verwendeten Arbeits- und Gegenwalzen mit sich bringen. Bei der Kalt- oder Warmverarbeitung von Eisen- oder Nichteisenmetallen kann der Wasserstoff, der durch Reaktion des Metalls mit dem im Kühlschmiermittel als äußere Phase vorhandenen Wasser entsteht, zu einer »Wasserstoffversprödung« des Walzenstahls führen, wodurch die Oberflächen der Arbeits- und Gegenwalzen immer brüchiger werden.

Öl-in-Wasser-Emulsionen, sogenannte Kühlschmiermittel, auf Basis von Spermöl (Walratöl), Spermöl-Mineralöl-Mischungen oder Abmischungen von Spermöl mit anderen pflanzlichen oder tierischen Ölen konnten bisher trotz der oben erwähnten Verschärfung der Anforderungen mit gutem Erfolg als Schmierstoffe bei der Metallbearbeitung eingesetzt werden. In jüngster Zeit wird der Walfang infolge internationaler Schutzmaßnahmen jedoch zunehmend eingeschränkt, so daß Spermöl in immer geringeren Mengen zur Verfügung steht.

Versuche, auf andere natürliche Öle pflanzlicher oder tierischer Herkunft auszuweichen, verliefen unbefriedigend. Rüböle z. B. altern bei den in modernen Hochgeschwindigkeits-Bandwalzwerken vorkommenden höheren Temperaturen zu rasch unter Verharzung und werden so in kurzer Zeit zur weiteren Verwendung unbrauchbar. Palmkernöle sind zwar beständiger gegen thermooxidative Alterung, sie weisen jedoch einen zu geringen Gehalt an äthylenisch ungesättigten aliphatischen Gruppen auf, um einer Wasserstoffversprödung des Walzenstahls bei hohen Bandgeschwindigkeiten (ca. 1000 M/Min.) wirksam begegnen zu können. Weitere preiswerte natürliche pflanzliche Öle wie Soja-, Baumwollsaat-, Erdnuß- oder Leinöle genügen jedoch infolge ihres hohen Gehaltes an mehrfach ungesättigten Fettsäuren nicht den hohen Anforderungen an die Thermooxidationsbeständigkeit.

Es ist daher schon versucht worden, synthetische Fettsäureester einzusetzen. Aus der DE-A-1 794 240 sind beispielsweise Ester von synthetischen Polyolen mit 2 bis 12 Hydroxylgruppen und $C_{12}-C_{22}$-Fettsäuren bekannt. Jedoch weichen auch diese Ester in ihren Eigenschaften vom Spermöl ab und genügen nicht allen Anforderungen bei der Metallbearbeitung.

Es besteht daher ein Bedarf an neuen preisgünstigen Schmiermitteln, die auch in Emulsion als Kühlschmiermittel eingesetzt werden können, ausgezeichnete Alterungsbeständigkeit, gute Schmierwirkung und Gebrauchseigenschaften wie Spermöl besitzen, einer Wasserstoffversprödung von Walzenstahl entgegenwirken und sich ähnlich wie Spermöl in vorteilhafter Weise bei der Bearbeitung und Verformung von Metallen verwenden lassen.

Es wurde nun gefunden, daß diese Anforderungen erfüllt werden von ungesättigten Kondensationsprodukten (Estern) von (cyclo)aliphatischen Polyolen mit aliphatischen Hydroxycarbonsäuren, deren Lactonen oder Oligomeren und (cyclo)aliphatischen Monocarbonsäuren.

Gegenstand der Erfindung sind Kondensationsprodukte aus Polyolen, aliphatischen Hydroxicarbonsäuren und Fettsäuren, die dadurch gekennzeichnet sind, daß sie

1. eine Säurezahl von 0,01 bis 30 mg KOH/g,
2. eine Hydroxylzahl von 0,01 bis 60 mg KOH/g und
3. eine Iodzahl von 30 bis 100 besitzen und aufgebaut sind aus

A) 5 bis 25 Gew.-% mindestens eines aliphatischen oder cycloaliphatischen Polyols mit 2 bis 60 Kohlenstoffatomen und 2 bis 8 alkoholischen Hydroxylgruppen pro Molekül;
B) 5 bis 40 Gew.-% mindestens einer aliphatischen, gesättigten oder einfach ungesättigten $C_6-C_{22}$-Hydroxycarbonsäure bzw. deren Lacton- und/oder deren oligomeren Kondensationsprodukten mit einem mittleren Oligomerisationsgrad von 2—50 und einem mittleren Molgewicht von 210—12 000 000, und
C) 35 bis 90 Gew.-% mindestens einer gesättigten oder ungesättigten, geradkettigen oder schwach verzweigten aliphatischen oder cycloaliphatischen $C_6-C_{24}$-Monocarbonsäure,

wobei die Summe der Komponenten A) bis C) 100 Gew.-% beträgt.

Die Bestimmung der Iodzahl erfolgt in bekannter Weise nach Hanus oder Wijs.

Bevorzugt sind derartige Kondensationsprodukte aus

---

0 015 494

A. 8 bis 18 Gew.-% Polyol,
B. 15 bis 35 Gew.-% Hydroxycarbonsäure und/oder deren Oligomerisationsprodukten, und
C. 47 bis 77 Gew.-% Monocarbonsäure.

Die erfindungsgemäßen Kondensationsprodukte unterscheiden sich von denen der GB-A-635 708 durch wesentliche Eigenschaften wie Säure-, Hydroxyl- und Iodzahl, aber auch im Aufbau und der stofflichen Zusammensetzung. Jene enthalten als wesentlichen Bestandteil Hydroxypolycarbonsäuren mit zwei oder drei Carbonylgruppen, die mit den Hydroxylgruppen eines zunächst hergestellten Teilesters aus einem Polyol und einer Fettsäure umgesetzt werden. Die in der Molekülmitte liegenden Hydroxylgruppen der Hydroxycarbonsäure bleiben unverestert, so daß die Produkte hohe Hydroxylzahlen besitzen. Die berechneten Hydroxylzahlen betragen z. B. 76,5 für Beispiel 1, 107 für Beispiel 2 und 86 für Beispiel 3. Die erfindungsgemäßen Produkte haben dagegen Hydroxylzahlen von 0,01—60, da bei höheren Werten die Schmierwirkung nicht mehr ausreichend ist.

Die erfindungsgemäßen Produkte unterscheiden sich auch dadurch von denen der britischen Patentschrift, daß sie sich ausschließlich von Monohydroxy-Monocarbonsäuren ableiten.

Beträgt die Säurezahl der Polykondensate mehr als 30 mg KOH/g, so läßt sich keine ausreichende »Fettung« der Metalloberfläche mehr erzielen. Darüber hinaus führen solche Produkte zu erhöhtem Verschleiß an den Metallbearbeitungswerkzeugen.

Die »Fettung« der Metalle ist auch bei Polykondensaten mit Hydroxylzahlen größer als 60 ungenügend. Daneben können solche hohen Gehalte an alkoholischen Hydroxylgruppen die Ölalterung beschleunigen.

Öle mit Iodzahlen unter 30 bieten keinen ausreichenden Schutz der Metallbearbeitungswerkzeugstähle vor Wasserstoffversprödung, während andererseits Öle mit Iodzahlen über 100 unter thermooxidativen Bedingungen zu rasch unter Verharzung altern.

Die Polyolkomponenten der erfindungsgemäßen Öle sind bevorzugt solche mit 2 bis 6 alkoholischen Hydroxylgruppen und setzen sich bevorzugt aus 2—20 Kohlenstoffatomen zusammen. Besonders bevorzugt sind aliphatische und cycloaliphatische mehrfache Alkohole. Als Beispiele seien genannt: Ethylenglykol, 1,2- und 1,3-Propylenglykol, 1,2-, 1,3- und 1,4-Butandiol, Pentandiole, Neopentylglykol, Hexandiole, Trimethylhexandiole, Decandiole, Dodecandiole, 2,2-Dimethyl-1,3-propandiol-2,2-dimethyl-3-hydroxypropionat, Diethylenglykol, Triethylenglykol, Tetraethylenglykol, Dipropylenglykol, Tripropylenglykol, Tetrapropylenglykol, 1,4-Cyclohexandimethanol, 1,1-Cyclohexan-dimethanol, Perhydrobisphenole, Glycerin, 1,2,4-Butantriol, Trimethylolethan, Trimethylolpropan, Trimethylolbutan, Pentaerythrit, Tetrosen, Bis- und Tris-Trimethylolpropan, Pentosen, 2,2,6,6-Tetrakis-(hydroxymethyl)-cyclohexanol, Hexosen, Di-pentaerythrit, Tri-pentaerythrit und Ethylenoxid- bzw. Propylenoxidaddukte an solche Polyole, sofern sie eine mittlere Zahl von 60 Kohlenstoffatomen pro Molekül nicht überschreiten.

Hydroxycarbonsäuren im Sinne der Erfindung sind z. B. ε-Hydroxycarpronsäuren bzw. deren Lactone, 12-Hydroxylaurinsäure, Hydroxystearinsäuren, besonders bevorzugt jedoch Ricinolsäure.

Oligomere Kondensationsprodukte der Hydroxycarbonsäuren sind Oligo-Hydroxycarbonsäuren wie Oligocaprolactone und Oligo-Ricinolsäuren, deren Herstellung dem Fachmann bekannt ist, oder Addukte von ε-Caprolacton an monomere oder oligomere Ricinolsäuren. Bevorzugt beträgt deren Oligomerisationsgrad 2 bis 20, die mittleren Molekulargewichte 210 bis 5000.

Als Monocarbonsäuren kommen künstliche oder natürliche Fettsäuren in Betracht, welche pro Molekül bis zu drei olefinische Doppelbindungen enthalten. Allerdings ist es notwendig, die Fettsäuren so auszuwählen, daß nicht mehr als 2 Gew.-% an dreifach ungesättigten und nicht mehr als 20 Gew.-% an doppelt ungesättigten Fettsäuren, bezogen auf das Gesamtgewicht der zugesetzten Hydroxycarbonsäuren und Fettsäuren, enthalten sind. Als Beispiele seien genannt:

Capronsäure, Caprylsäure, 2-Ethylhexansäure, Cyclohexylcarbonsäure, Isononansäure, Caprinsäure, Laurinsäure, Myristinsäure, Palmitinsäure, Stearinsäure, Eicosansäure, 10-Undecensäure, Palmitoleinsäure, Ölsäure, Fettsäuregemische wie Talg-, Raps-, Speck-, Erdnuß-, Baumwollsaat-, Kokos-, Palmkern-, Palm- oder Sojaölfettsäuren und Isostearinsäure.

Die Herstellung der erfindungsgemäßen Polykondensate erfolgt durch Kombination der in der Literatur bekannten Verfahren zur Oligomerisierung von Hydroxycarbonsäuren und zur Fertigung von Fettsäuren mehrwertiger Alkohole.

Die erfindungsgemäßen Schmiermittel können allein oder in Abmischung mit Mineralölen, Esterölen, Polyetherölen, Poly-α-olefinen oder Phosphatölen, gegebenenfalls unter Zusatz üblicher Additive wie Antioxidantien, Antiverschleiß- und Korrosionsschutzadditive, Hochdruck-Zusätze, Emulgatoren, Antischaumadditive oder antimikrobieller Wirkstoffe flüssig oder in Form einer Öl-in-Wasser-Emulsion bei der Bearbeitung und Verformung von Metallen, bevorzugt bei der spanlosen Verformung von Metallen wie z. B. Stahl, Aluminium, Magnesium, Kupfer, Messing und Titan, verwendet werden.

Die Polykondensate im Sinne der Erfindung zeichnen sich durch ausgezeichnete Alterungsstabilität und »Fettung« der Metalle, d. h. gute Haftung des Schmierfilmes auf den Metalloberflächen aus, sowie durch gute Viskositäts-Temperatur-Eigenschaften.

Falls Mischungen der erfindungsgemäßen Kondensationsprodukte mit anderen Schmierölen, z. B.

3

Mineralölen verwendet werden, sollen auch derartige Mischungen Jodzahlen von 30 bis 100 besitzen. Zur Abmischung können daher auch solche Kondensationsprodukte verwendet werden, die selbst gegebenenfalls höhere Jodzahlen haben.

Die folgenden Beispiele erläutern die Erfindung

### Beispiel 1

Zunächst wurden zur Herstellung von Oligo-Ricinolsäure 462,8 g Ricinusöl mit 372,5 g Ricinolsäure unter Rühren und Durchleiten eines Stickstoffstroms in 1 Std. auf 140°C, dann innerhalb von 5 Stunden auf 190°C am Wasserabscheider erhitzt. Nach etwa 6 Stunden bei 190°C betrug die Säurezahl 9,3 mg KOH/g. Anschließend wurden nach Abkühlung auf 100°C 335,0 g Trimethylolpropan sowie 2,75 g Titantetrabutylat zugegeben. Danach wurde der Ansatz in einer Stunde auf 140°C, dann in 4 Stunden auf 180°C erhitzt. Nach 6stündigem Rühren bei 180°C wurde erneut abgekühlt auf 100°C und 1370 g Talgfettsäure sowie 360,0 g 2-Ethylhexansäure zugefügt. Wiederum wurde der Ansatz auf 190°C erhitzt und unter Wasserabspaltung bis zum Erreichen einer Säurezahl von 10 mg KOH/g bei dieser Temperatur gehalten. Die Auslaufviskosität des Endproduktes bei 20°C lag bei 58 Sec. (4 mm Ford-Becher).

Hydroxylzahl: 55—56;
Jodzahl (nach Hanus): 58—61;
kinem. Viskosität (37,8°C) = 95,6 cSt [mm²/sec]
kinem. Viskosität (98,9°C) = 13,2 cSt[mm²/sec]
Viskositätsindex$_E$: 147

### Beispiel 2

694,2 g Ricinusöl wurden mit 558,8 g Ricinolsäure unter Rühren und Durchleiten von Stickstoff in 1 Stunde auf 140°C, dann innerhalb von 5 Stunden auf 190°C am Wasserabscheider erhitzt. Nach etwa zweistündigem Rühren bei 190°C betrug die Säurezahl 9,8 mg KOH/g. Nach Abkühlung auf 100°C wurden 502,5 g Trimethylolpropan sowie 4,8 g Titantetrabutylat zugegeben, innerhalb 1 h auf 180°C erhitzt und 6 h bei dieser Temperatur belassen. Es wurde wieder auf 100°C abgekühlt, 2466,0 g Talgfettsäure, 194,4 g Laurinsäure und 363,0 g Isostearinsäure zugegeben und innerhalb 1 h auf 140°C, danach innerhalb von 6 h auf 190°C erhitzt. Isostearinsäure ist ein handelsübliches Gemisch schwach methylverzweigter gesättigter $C_{18}$-Fettsäuren, das z. B. 16-Methylheptadecansäure enthält. Nach 10stündiger Reaktion bei 190°C hatte der Ansatz eine Säurezahl von 10,2 mg KOH/g erreicht. Die Auslaufviskosität des Endproduktes bei 20°C lag bei 65 Sec. (4 mm Ford-Becher).

Hydroxylzahl: 48;
Jodzahl (nach Hanus): 63—64;
kinem. Viskosität (37,8°C) = 115,0 cSt [mm²/sec]
kinem. Viskosität (98,9°C) = 17,2 cSt [mm²/sec]
Viskositätsindex$_E$ = 174

## Patentansprüche

1. Kondensationsprodukte aus Polyolen, aliphatischen Hydroxycarbonsäuren und Fettsäuren, dadurch gekennzeichnet, daß die Kondensationsprodukte

1) eine Säurezahl von 0,01 bis 30 mg KOH/g,
2) eine Hydroxylzahl von 0,01 bis 60 mg KOH/g und
3) eine Jodzahl von 30 bis 100 besitzen und aufgebaut sind aus

A) 5 bis 25 Gew.-% mindestens eines aliphatischen oder cycloaliphatischen Polyols mit 2 bis 60 Kohlenstoffatomen und 2 bis 8 alkoholischen Hydroxylgruppen pro Molekül,

B) 5 bis 40 Gew.-% mindestens einer aliphatischen, gesättigten oder einfach ungesättigten $C_6$—$C_{22}$-Hydroxycarbonsäure bzw. deren Lacton und/oder deren oligomere Kondensationsprodukte mit einem mittleren Oligomerisationsgrad von 2 bis 50 und einem mittleren Molgewicht von 210 bis 12 000 und

C) 35 bis 90 Gew.-% mindestens einer gesättigten oder ungesättigten, geradkettigen oder schwach verzweigten aliphatischen oder cycloaliphatischen $C_6$—$C_{24}$-Monocarbonsäure,

4

wobei die Summe der Komponenten A) bis C) 100 Gew.-% beträgt.

2. Kondensationsprodukte nach Anspruch 1, dadurch gekennzeichnet, daß sie aus

A)  8 bis 18 Gew.-% Polyol,
B)  15 bis 35 Gew.-% $C_6-C_{22}$-Hydroxycarbonsäure und/oder deren Oligomerisationsprodukten und
C)  47 bis 77 Gew.-% $C_6-C_{24}$-Monocarbonsäure, bestehen.

3. Kondensationsprodukte nach Anspruch 1 und 2, dadurch gekennzeichnet, daß Polyole mit 2 bis 20 Kohlenstoffatomen und 2 bis 6 alkoholischen Hydroxylgruppen pro Molekül verwendet werden.

4. Kondensationsprodukte nach Anspruch 1 bis 3, dadurch gekennzeichnet, daß als Hydroxycarbonsäure Ricinolsäure verwendet wird.

5. Kondensationsprodukte nach Anspruch 1 bis 4, dadurch gekennzeichnet, daß Oligomerisationsprodukte von Hydroxycarbonsäuren mit einem mittleren Oligomerisationsgrad von 2 bis 20 und einem mittleren Molgewicht von 210 bis 5000 verwendet werden.

6. Verwendung der Kondensationsprodukte nach Anspruch 1 bis 5 allein oder im Gemisch mit anderen schmierwirksamen Ölen, gegebenenfalls unter Zusatz üblicher Additive, als Schmiermittel für die Metallbearbeitung.

7. Verwendung der Kondensationsprodukte oder Schmiermittel nach Anspruch 1 bis 6 in Form einer Öl-in-Wasser-Emulsion als Kühlschmiermittel für die spanlose Metallbearbeitung.

## Claims

1. Condensation products produced from polyols, aliphatic hydroxycarboxylic acids and fatty acids, characterised in that the condensation products have

1)  an acid number of 0.01 to 30 mg KOH/g,
2)  a hydroxyl number of 0.01 to 60 mg KOH/g and
3)  an iodine number of 30 to 100

and are composed of

A)  5 to 25% by weight of at least one aliphatic or cycloaliphatic polyol containing 2 to 60 carbon atoms and 2 to 8 alcoholic hydroxyl groups per molecule,
B)  5 to 40% of at least one aliphatic, saturated or once unsaturated $C_6-C_{22}$-hydroxycarboxylic acid or a lactone thereof and/or oligomeric condensation products thereof with an average degree of oligomerisation of 2 to 50 and an average molecular weight of 210 to 12,000 and
C)  35 to 90% by weight of at least one saturated or unsaturated, straight-chained or slightly branched, aliphatic or cycloaliphatic $C_6-C_{24}$-monocarboxylic acid,

wherein the sum of the components A) to C) is 100% by weight.

2. Condensation products according to Claim 1, characterised in that they consist of

A)  8 to 18% by weight to the polyol,
B)  15 to 35% by weight of the $C_6-C_{22}$-hydroxycarboxylic acid and/or the oligomerisation products thereof and
C)  47 to 77% by weight of the $C_6-C_{24}$-monocarboxylic acid.

3. Condensation products according to Claim 1 and 2, characterised in that polyols containing 2 to 20 carbon atoms and 2 to 6 alcoholic hydroxyl groups per molecule are used.

4. Condensation products according to Claim 1 to 3, characterised in that ricinoleic acid is used as the hydroxycarboxylic acid.

5. Condensation products according to Claim 1 to 4, characterised in that oligomerisation products of hydroxycarboxylic acids having an average degree of oligomerisation of 2 to 20 and an average molecular weight of 210 to 5,000 are used.

6. Use of the condensation products according to Claim 1 to 5 alone or in admixture with other lubricating oils, optionally with the addition of customary additives, as lubricants for the working of metal.

7. Use of the condensation products or lubricants according to Claim 1 to 6 in the form of an oil-in-water emulsion as cooling lubricants for the non-cutting working of a metal.

**Revendications**

1. Produits de condensation de polyols, d'acides hydroxycarboxyliques aliphatiques et d'acides gras, caractérisés en ce que les produits de condensation possèdent:

1) un indice d'acide de 0,01 à 30 mg de KOH/g,
2) un indice d'hydroxyle de 0,01 à 60 mg de KOH/g et
3) un indice d'iode de 30 à 100

et sont constitués de

A) 5 à 25% en poids d'au moins un polyol aliphatique ou cycloaliphatique ayant 2 à 60 atomes de carbone et 2 à 8 groupes hydroxyle alcooliques par molécule,
B) 5 à 40% en poids d'un moins un acide hydroxycarboxylique en $C_6-C_{22}$ aliphatique, saturé ou mono-insaturé, ou de sa lactone et/ou de ses produits de condensation oligomères ayant un degré moyen d'oligomérisation de 2 à 50 et un poids moléculaire moyen de 210 à 12 000 et de
C) 35 à 90% en poids d'au moins un acide monocarboxylique en $C_6-C_{24}$ saturé ou insaturé, à chaîne droite ou faiblement ramifiée, aliphatique ou cycloaliphatique,

la somme des composants A) à C) s'élevant à 100% en poids.

2. Produits de condensation selon la revendication 1, caractérisés en ce qu'ils consistent en

A) 8 à 18% en poids de polyol,
B) 15 à 35% en poids d'acide hydroxycarboxylique en $C_6-C_{22}$ et/ou de ses produits d'oligomérisation et en
C) 47 à 77% en poids d'acide monocarboxylique en $C_6-C_{24}$.

3. Produits de condensation selon les revendications 1 et 2, caractérisés en ce que l'on utilise des polyols ayant 2 à 20 atomes de carbone et 2 à 6 groupes hydroxyle alcooliques par molécule.

4. Produits de condensation selon les revendications 1 à 3, caractérisés en ce qu'on utilise comme acide hydroxycarboxylique de l'acide ricinoléique.

5. Produits de condensation selon les revendications 1 à 4, caractérisés en ce qu'on utilise des produits d'oligomérisation d'acides hydroxycarboxyliques ayant un degré moyen d'oligomérisation de 2 à 20 et un poids moléculaire moyen de 210 à 5000.

6. Utilisation des produits de condensation selon les revendications 1 à 5 isolément ou en mélange avec a'autres huiles lubrifiantes efficaces, éventuellement avec addition d'additifs usuels, en tant qu'agents de lubrification pour le travail des métaux.

7. Utilisation des produits de condensation ou lubrifiants selon les revendications 1 à 6 sous forme d'une émulsion huile-dans-l'eau comme agents de lubrifrication à froids pour le travail des métaux sans enlèvement de copeaux.